# FASCICULE DE BREVET EUROPEEN

(11) **EP 3 195 392 B1**
(45) Date de publication et mention de la délivrance du brevet: **14.04.2021**
(21) Numéro de dépôt: 15787652.5
(22) Date de dépôt: 16.09.2015
(51) Int. Cl.: H01M 8/02, H01M 8/24, H01M 8/10

(54) **PLAQUE DE GUIDAGE D'ECOULEMENT D'UN FLUIDE POUR REACTEUR ELECTROCHIMIQUE ET ENSEMBLE COMPORTANT CETTE PLAQUE**
FLUIDVERTEILERPLATTE FÜR ELEKTROCHEMISCHEN REAKTOR UND ANORDNUNG ENTHALTEND DIE SELBIGE
FLUID FLOW PLATE FOR ELECTROCHEMICAL REACTOR AND ASSEMBLY COMPRISING THE SAME

(30) Priorité: 19.09.2014 FR 1458850
(43) Date de publication de la demande: 26.07.2017
(73) Titulaire: Commissariat à l'Energie Atomique et aux Energies Alternatives, 75015 Paris (FR)
(72) Inventeur: POIROT-CROUVEZIER, Jean-Philippe, F-38450 Saint Georges De Commiers (FR)
(74) Mandataire: INNOV-GROUP
(86) Numéro de dépôt international: PCT/FR2015/052487
(87) Numéro de publication internationale: WO 2016/042268

(56) Documents cités:
- EP-A1- 2 299 527
- US-A1- 2007 178 359
- US-A1- 2011 165 500
- US-A1- 2011 207 018
- US-A1- 2013 316 263

## Description

L'invention concerne les piles à combustible, et en particulier les piles à combustible comprenant une alternance de membranes échangeuses de protons et de plaques bipolaires.

Les piles à combustible sont envisagées comme système d'alimentation électrique pour des véhicules automobiles produits à grande échelle dans le futur, ainsi que pour un grand nombre d'applications. Une pile à combustible est un dispositif électrochimique qui convertit de l'énergie chimique directement en énergie électrique. Un combustible tel que du dihydrogène ou du méthanol est utilisé comme carburant de la pile à combustible.

Dans le cas du dihydrogène, celui-ci est oxydé et ionisé sur une électrode de la pile et un comburant est réduit sur une autre électrode de la pile. La réaction chimique produit de l'eau au niveau de la cathode, de l'oxygène étant réduit et réagissant avec les protons. Le grand avantage de la pile à combustible est d'éviter des rejets de composés polluants atmosphériques sur le lieu de génération d'électricité.

Les piles à combustible à membrane d'échange de protons, dites PEM, fonctionnent à basse température et présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, le dihydrogène est ionisé pour produire des protons traversant la membrane. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques dites bipolaires, par exemple en métal, empilées les unes sur les autres. La membrane est disposée entre deux plaques bipolaires. Les plaques bipolaires peuvent comprendre des canaux et collecteurs d'écoulement pour guider les réactifs et les produits vers/depuis la membrane, pour guider du liquide de refroidissement, et pour séparer différents compartiments. Les plaques bipolaires sont également électriquement conductrices pour former des collecteurs des électrons générés au niveau de l'anode. Les plaques bipolaires ont également une fonction mécanique de transmission des efforts de serrage de l'empilement, nécessaire à la qualité du contact électrique. Des couches de diffusion gazeuse sont interposées entre les électrodes et les plaques bipolaires et sont en contact avec les plaques bipolaires.

Une conduction électronique est réalisée à travers les plaques bipolaires, une conduction ionique étant obtenue à travers la membrane.

Les plaques bipolaires alimentent en continu les surfaces réactives des électrodes en réactifs, au fur et à mesure de leur consommation. La distribution des réactifs aux électrodes doit être la plus homogène possible sur toute leur surface. Les plaques bipolaires comportent des réseaux de canaux d'écoulement assurant la distribution des réactifs. Un réseau de canaux d'écoulement est dédié au fluide anodique, et un réseau de canaux d'écoulement est dédié au fluide cathodique. Les réseaux de canaux d'écoulement anodiques et cathodiques ne sont jamais en communication à l'intérieur de la pile, afin d'éviter la combustion directe du carburant et du comburant. Les produits de réactions et les espèces non réactives sont évacués par entraînement par l'écoulement jusqu'à la sortie des réseaux de canaux de distribution. Dans la plupart des architectures rencontrées, les plaques bipolaires comportent des canaux d'écoulement traversés pour du fluide de refroidissement, permettant l'évacuation de la chaleur produite.

On distingue principalement trois modes de circulation des réactifs dans les canaux d'écoulement :
- les canaux en serpentin: un ou plusieurs canaux parcourent l'ensemble de la surface active en plusieurs allers-retours.
- les canaux parallèles: un faisceau de canaux parallèles et traversants parcourt la surface active de part en part.
- les canaux interdigités: un faisceau de canaux parallèles et bouchés parcourt la surface active de part en part. Chaque canal est bouché soit du côté de l'entrée, soit du côté de la sortie de fluide. Le fluide entrant dans un canal est alors contraint à traverser localement la couche de diffusion gazeuse pour rejoindre un canal adjacent et ensuite atteindre la sortie de fluide de ce canal adjacent.

Les exigences de miniaturisation et de compacité sont désormais de plus en plus importantes dans de nombreux domaines d'application des piles à combustible. Aussi, il est primordial de réduire l'encombrement de la pile et notamment l'épaisseur des plaques bipolaires. Un moyen typiquement utilisé pour ce faire est de diminuer la taille des canaux d'écoulement. Cependant, cela engendre des pertes de charge importantes dans les canaux interdigités ou en serpentin, ce qui amoindrit les performances de la pile.

On utilise donc des canaux parallèles, qui sont alors moins sujets aux pertes de charge. Mais, dans ce cas, la réalisation de la plaque d'écoulement s'en trouve compliquée, du fait du parallélisme des canaux d'écoulement, car il devient alors difficile de positionner les collecteurs d'écoulement, par lesquels les réactifs sont transportés entre l'extérieur de la plaque bipolaire et leurs canaux d'écoulement respectifs, sans causer un encombrement excessif de la plaque bipolaire.

Pour y remédier, on utilise typiquement une plaque bipolaire comportant une zone dite d'homogénéisation, à laquelle sont raccordés fluidiquement les collecteurs d'écoulement et les canaux parallèles, comme décrit par le document WO 2010/054744 A1, par exemple à la figure 1 de ce document.

La plaque bipolaire comporte un second groupe de canaux, dits canaux d'alimentation, formant la zone d'homogénéisation et qui guident les réactifs entre les collecteurs d'écoulement et les canaux parallèles. Ces canaux d'alimentation s'étendent suivant des directions différentes de celle des canaux parallèles. Cela permet de disposer les collecteurs d'écoulement de façon décalée les uns par rapport aux autres, de façon à en réduire l'encombrement.

Cette solution présente cependant l'inconvénient d'engendrer l'apparition, entre les canaux d'écoulement, d'une différence de pression du réactif circulant dans ces canaux d'écoulement, car les canaux d'alimentation de la zone d'homogénéisation présentent alors des longueurs différentes. Une différence de pression entre les canaux d'écoulement est désavantageuse, car elle déséquilibre le fonctionnement de la pile en y faisant apparaître des zones peu alimentées en réactifs, ou en y faisant apparaître des disparités des conditions de réaction. Aucune solution connue ne permet de concilier, à la fois, une grande compacité de la zone d'homogénéisation et des pressions homogènes en entrée dans des canaux d'écoulement.

Le document US2011165500 décrit une pile à combustible munie d'un empilement de plaques bipolaires. Une paroi est ménagée entre des canaux d'alimentation et des canaux d'écoulement d'une zone réactive. La paroi s'étend sur toute la hauteur des canaux d'écoulement pour faire office de joint. Des orifices discrets sont ménagés dans la paroi, pour mettre en communication les canaux d'alimentation avec les canaux d'écoulement. Une telle structure induit des pertes de charge non négligeables et ne permet pas de garantir une homogénéité de pression suffisante à l'entrée des canaux d'écoulement.

Le document US2011207018A1 décrit une structure de pile à combustible. Une plaque séparatrice comporte des canaux d'alimentation et des canaux d'écoulement d'une zone réactive. Les canaux d'alimentation sont séparés des canaux d'écoulement par une succession de parois. Les parois s'étendent sur toute la hauteur des canaux d'écoulement pour supporter une membrane échangeuse de protons de la pile à combustible. Des orifices sont ménagés dans les parois pour mettre en communication les canaux d'alimentation avec les canaux d'écoulement. Une telle structure induit également des pertes de charge non négligeables et ne permet pas de garantir une homogénéité de pression suffisante à l'entrée des canaux d'écoulement.

L'invention vise à résoudre un ou plusieurs de ces inconvénients. L'invention porte ainsi sur une plaque de guidage d'écoulement d'un fluide pour réacteur électrochimique, telle que définie dans les revendications annexées.

Selon un autre aspect, l'invention porte sur un ensemble pour un réacteur électrochimique tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 illustre, selon une vue en perspective éclatée, un exemple d'un réacteur électrochimique incluant un ensemble comportant un assemblage membrane/électrodes et des plaques bipolaires pour une pile à combustible ;
- la figure 2 illustre, selon une vue de dessus, une portion d'une plaque bipolaire de l'ensemble de la figure 1 ;
- les figures 3 et 4 illustrent schématiquement et selon une vue partielle un canal d'échange de la plaque de la figure 2 ;
- la figure 5 illustre schématiquement un gradient de pression de fluide en entrée de canaux d'écoulement de la plaque des figures 3 et 4 ;
- la figure 6 illustre schématiquement un autre mode de réalisation du canal d'échange des figures 3 et 4.

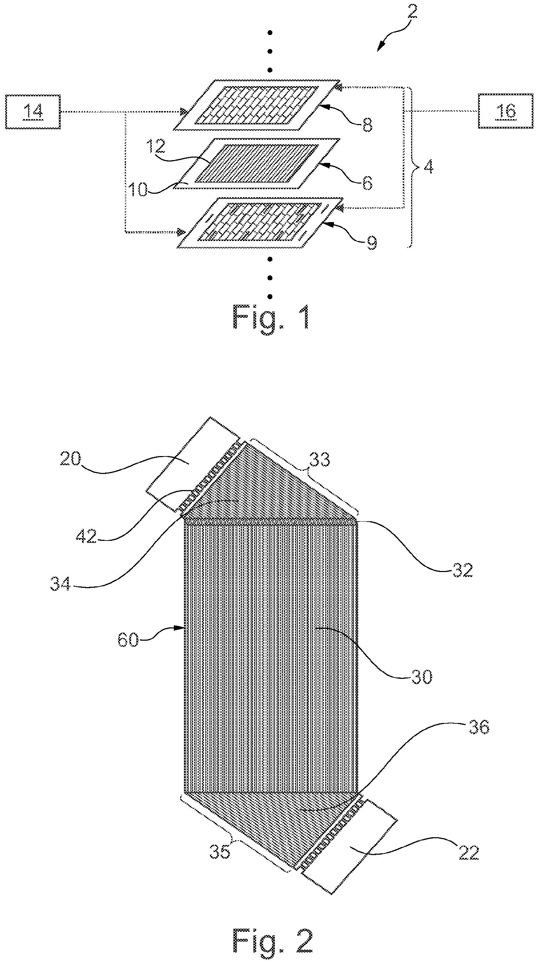

La figure 1 représente un réacteur électrochimique 2, tel qu'une pile à combustible. Ce réacteur 2 comporte un ensemble 4 formé d'un assemblage membrane-électrodes 6 (noté AME) et de plaques bipolaires 8, 9 superposés entre elles. Généralement, le réacteur 2 comporte une pluralité d'ensembles identiques à l'ensemble 4 et superposés les uns aux autres. Chaque plaque 8, 9 est en contact avec deux AME. Mais, pour simplifier la description, seul l'ensemble 4 est ici décrit en détail.

Chaque AME 6 comprend un électrolyte 10, une cathode (non illustrée) et une anode 12 placées de part et d'autre de l'électrolyte et fixées sur les faces opposées de cet électrolyte 10. La couche d'électrolyte 10 forme une membrane semi-perméable permettant une conduction protonique tout en étant imperméable aux gaz présents dans l'ensemble. La couche d'électrolyte empêche également un passage des électrons entre l'anode 12 et la cathode.

L'AME 6 présente ici une forme plane.

Les plaques 8, 9 sont configurées pour assurer l'alimentation de l'AME 6 en un fluide tel que du carburant ou du comburant. Dans cet exemple, chaque plaque 8, 9 définit, sur une de ses faces externes, un ensemble de canaux d'écoulement anodiques et, sur l'autre face externe située à l'opposé, un ensemble de canaux d'écoulement cathodiques. Chaque face externe définit ainsi une plaque de guidage d'écoulement d'un fluide. Ces canaux d'écoulement seront définis plus en détail dans ce qui suit. Les plaques 8, 9 définissent également des canaux d'écoulement d'un liquide de refroidissement (non représentés) faisant partie du circuit de refroidissement.

Ici, sur chacune des deux faces de l'AME 6 on dispose une plaque bipolaire 8, 9. Les plaques bipolaires 8 et 9 sont tournées de telle sorte que :
- la face de la plaque 8 qui est en contact avec l'AME 6 définisse l'un ou l'autre des ensembles de canaux d'écoulement anodiques ou cathodiques, et
- la face de la plaque 9 qui est en contact avec l'AME 6 définisse l'autre des ensembles de canaux d'écoulement anodiques ou cathodiques.

Avantageusement, l'invention est mise en œuvre sur la face anodique d'une plaque bipolaire 8, 9.

Ici, les plaques 8, 9 sont identiques. Aussi, par la suite, seule la plaque 8 sera décrite en détail.

Les plaques 8 peuvent être formées de façon connue en soi à partir d'une ou plusieurs tôles métalliques conductrices, par exemple en acier inoxydable, ou en alliage de titane, en alliage d'aluminium, en alliage de nickel ou en alliage de tantale. Les plaques 8 peuvent également être obtenues par d'autres procédés, comme le moulage ou l'injection à partir de composites carbone-polymère. L'ensemble 4 peut également comprendre des joints d'étanchéité périphériques et des renforts de membrane non illustrés ici.

Le réacteur 2 comporte en outre des sources, ou réservoirs, de carburant 14 et de comburant 16. Ces sources 14 et 16 sont toutes deux reliées à l'ensemble 4 pour l'alimenter en carburant et en comburant.

De façon connue en soi, durant le fonctionnement du réacteur 2, du carburant s'écoule entre l'AME et une plaque bipolaire, et du comburant s'écoule entre cette AME et une autre plaque bipolaire. Ici, comme le réacteur 2 est une pile à combustible, le carburant est du dihydrogène et le comburant est du dioxygène. L'ensemble 4 possède également ici un circuit de refroidissement (non représenté sur les figures).

Au niveau de l'anode, le dihydrogène est ionisé pour produire des protons qui traversent l'AME. Les électrons produits par cette réaction sont collectés par une plaque 8. Les électrons produits sont ensuite appliqués sur une charge électrique connectée à la pile à combustible 2 pour former un courant électrique. Au niveau de la cathode, de l'oxygène est réduit et réagit avec les protons pour former de l'eau. Les réactions au niveau de l'anode et de la cathode sont régies comme suit :

H₂ → 2H⁺ + 2e⁻ au niveau de l'anode ;

4H⁺ + 4e⁻ + O₂ → 2H₂O au niveau de la cathode.

Durant son fonctionnement, l'ensemble 4 de la pile à combustible génère usuellement une tension continue entre l'anode et la cathode de l'ordre de 1V.

La figure 2 représente plus en détail la plaque 8. La plaque 8 comporte, sur une même face :
- des collecteurs d'écoulement 20 et 22,
- un réseau d'écoulement comportant une pluralité de canaux d'écoulement 30, s'étendant selon un axe dit longitudinal ;
- un premier canal d'échange 32, s'étendant selon une direction transversale à l'axe longitudinal des canaux 30,
- un premier réseau 33 d'alimentation, formé d'une pluralité de premiers canaux d'alimentation 34,
- un second réseau 35 d'alimentation, formé d'une pluralité de seconds canaux d'alimentation 36.

Les canaux 30, 34 et 36 sont ménagés sur la plaque 8 pour permettre l'écoulement d'un fluide entre les collecteurs 20 et 22. Ce fluide est par exemple le carburant ou le comburant. Dans cet exemple, il s'agit du carburant H₂. A cet effet, le collecteur 20 est relié fluidiquement au réservoir 14. Le collecteur 22 est relié à un dispositif de récupération de résidus de la réaction (non représenté). Dans cet exemple, le fluide s'écoule depuis le collecteur 20 vers le collecteur 22.

Ici, ces canaux 30, 32, 34 et 36 sont ménagés sur la face de la plaque 8 qui est tournée vers l'AME 6. Dans cet exemple, les canaux sont formés par une dépression dans la plaque 8. Ils sont recouverts par l'AME 6, ce qui permet au fluide de circuler dans ces canaux sans fuir à l'extérieur de l'ensemble 4. Pour mesurer la section transversale d'un canal, on considère cependant que chaque canal est délimité, sur sa partie supérieure, par un plan virtuel, parallèle au plan de la plaque 8 et passant par l'extrémité supérieure des canaux. En effet, typiquement, l'AME 6 n'est pas parfaitement plane et peut présenter localement des affaissements du fait d'une faible rigidité. Ici, pour chaque plaque 8, 9, le qualificatif « supérieur » fait référence à la partie de la plaque 8, 9 qui est la plus proche de l'AME 6.

Les canaux 30 s'étendent ici longitudinalement et parallèlement entre eux. Les canaux 30 ont ici tous la même longueur. Avantageusement, les canaux 30 ont tous la même section transversale. Dans cette description, la section transversale d'un canal est mesurée dans un plan perpendiculaire à la plaque 8.

Par exemple, le nombre de canaux 30 est supérieur ou égal à dix ou vingt ou cinquante. Le nombre de canaux 30 est ici inférieur ou égal à mille ou cent. Les canaux 30 ont ici une longueur comprise entre 1 cm et 100cm.

C'est au niveau des canaux 30 que se produisent les réactions électrochimiques lors du fonctionnement du réacteur. Plus précisément, on définit une zone de réaction de l'ensemble 4 comme étant la zone de superposition des canaux 30 de la plaque 8 et des canaux 30 de la plaque 9 lorsque les plaques 8 et 9 sont superposées.

Chaque canal 34 est connecté fluidiquement :
- d'un côté, par une première extrémité au collecteur 20, et
- de l'autre côté, par une seconde extrémité 40, au canal 32.

Les canaux 34 s'étendent longitudinalement, ici essentiellement selon une direction distincte de celle des canaux 30. Ici, ces canaux 34 sont parallèles entre eux. La droite selon laquelle les canaux 34 s'étendent présente un angle supérieur ou égal à 30° par rapport à l'axe longitudinal.

Ce positionnement des canaux 34 permet de placer le collecteur 20 de façon déportée par rapport aux canaux 30 et permet de décaler les différents canaux les uns par rapport aux autres. Grâce à cela, il est possible de placer d'autres collecteurs sur la plaque 8, comme des collecteurs pour le circuit de refroidissement ou pour le comburant. Cela concourt à une amélioration de la compacité de l'ensemble 4 et donc du réacteur 2.

Les canaux 34 favorisent également une meilleure homogénéisation de la pression du fluide qui circule dans tous ces canaux, de sorte à limiter l'apparition d'un gradient de pression entre les canaux 34 distants du réseau 33. On définit une zone d'homogénéisation de l'ensemble 4 comme étant la zone de superposition des canaux 34 de la plaque 8 et des canaux 34 de la plaque 9 lorsque les plaques 8 et 9 sont superposées. La zone d'homogénéisation peut aussi être définie par une zone de l'empilement où les électrodes des AME ne recouvrent pas les canaux 34. Du fait de leurs angles par rapport aux canaux 30, les canaux 34 présentent des longueurs différentes les uns par rapport aux autres. Ici, le réseau 33 présente une forme triangulaire dont un des côtés est formé par le canal 32 et dont un autre côté est formé par une interface 42 de raccordement, ou orifices d'injection, des premières extrémités des canaux 32 au collecteur 20.

La largeur des canaux 34, mesurée à mi-profondeur de ces canaux, est choisie suffisamment grande pour ne pas générer une perte de charge excessive pour le fluide qui y circule, mais suffisamment rapprochées pour assurer un soutien mécanique de l'AME 6 pour éviter que celle-ci ne s'affaisse à l'intérieur du canal, du fait de sa faible rigidité. Par exemple, la largeur d'un canal 34 est comprise entre 0,5*H et 10*H et, de préférence, entre 2*H et 3*H, H étant la profondeur du canal 34. Cette largeur est ici supérieure à celle des canaux 30. Les canaux 34 présentent ici tous une largeur identique entre eux.

Les canaux 36 jouent le même rôle que les canaux 34, en référence au collecteur 22. Ici, les canaux 36 sont identiques aux canaux 34 sauf que leur première extrémité respective est connectée fluidiquement au collecteur 22. Aussi, par la suite, on ne décrira en détail que les canaux 30, 32 et 34.

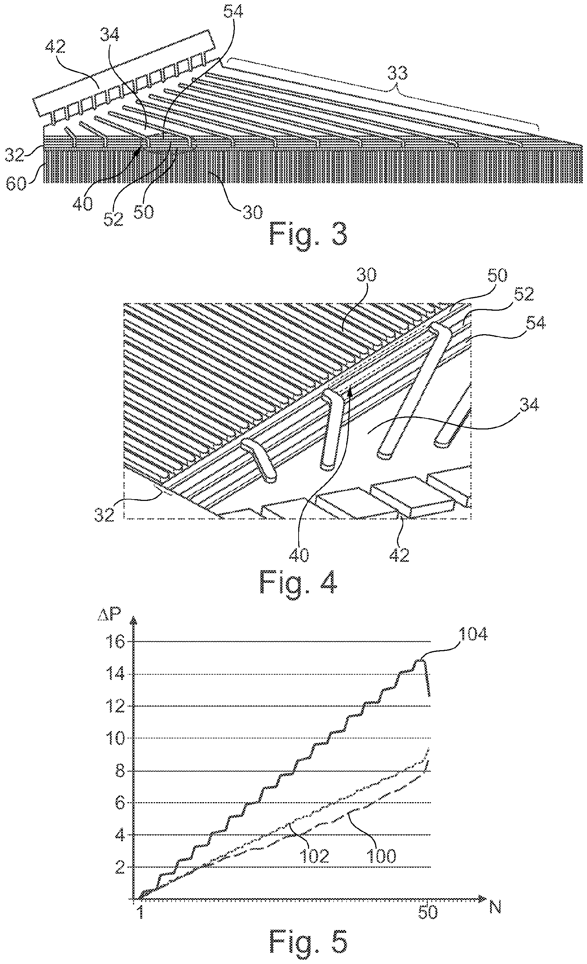

Les figures 3 et 4 représentent plus en détail le canal 32. Le canal 32 met en communication entre eux les canaux 30 et 34, pour que le fluide puisse s'écouler entre les canaux 30 et 34. Le canal 32 met en communication au moins un tiers des canaux 30. Ici, le canal 32 met en communication tous les canaux 30 avec tous les canaux 34, afin de favoriser une homogénéisation de pression d'écoulement pour tous les canaux 30.

Le canal 32 comporte en outre au moins un obstacle 50 pour obturer partiellement l'écoulement du fluide entre les extrémités 40 et les canaux 30.

Une section de passage de fluide continue est ménagée au-dessus de l'obstacle 50 le long de la direction transversale. Cette section de passage s'étend en continu en vis-à-vis des canaux d'écoulement 30, ici sur toute la longueur du canal d'échange 32. Cette section de passage de fluide présentant une hauteur au moins égale à 30% de la hauteur des canaux 34. La hauteur de l'obstacle 50 est mesurée selon une direction perpendiculaire à la plaque. La hauteur de la section de passage correspond à la différence de hauteur entre l'obstacle 50 et le sommet des canaux 30.

L'obstacle 50 crée une restriction de l'écoulement direct du fluide entre chaque canal 34 et chaque canal 30. L'écoulement du fluide est modifié, de sorte qu'au moins une partie du fluide est contrainte de s'écouler à travers la section de passage, selon la direction du canal 32 à l'intérieur de ce canal 32. Ainsi, l'écoulement du fluide se répartit entre plusieurs canaux 30, ce qui limite le gradient de pression du fluide entre les canaux 30. Par ailleurs, l'obstacle 50 induit une perte de charge dont l'ordre de grandeur est supérieur à la perte de charge de l'écoulement à travers les canaux 30.

Du fait que la section de passage s'étend en continu en vis-à-vis des canaux d'écoulement, l'homogénéisation de pression est bien réalisée selon la direction transversale pour l'ensemble des canaux 30, au-dessus de l'obstacle 50 qui favorise déjà cette homogénéisation. La pression dans la section de passage du canal 32 est donc assez homogène et s'homogénéise d'autant plus que le canal 32 met ici en communication l'ensemble des canaux 34.

Afin de ne pas induire une perte de charge excessive au niveau de l'obstacle 50, la section de passage de fluide au-dessus de l'obstacle 50 présente une hauteur au moins égale à 30% de la hauteur des canaux d'alimentation 34. La hauteur est ici mesurée selon une direction normale à la plaque 8. La hauteur de la section de passage est avantageusement comprise entre 40 et 60% de la hauteur des canaux 34.

De préférence, l'obstacle 50 ménage une section de passage du fluide au moins 30% ou 40% inférieure à la somme des sections transversales des extrémités 40, pour induire une perte de charge favorisant suffisamment l'homogénéisation de pression. A cet effet, l'obstacle 50 est ménagé entre chaque extrémité 40 et les canaux 30. L'obstacle 50 présente une hauteur par exemple au moins égale à 30%, voire au moins égale à 50% de la hauteur des canaux 34. La hauteur est ici mesurée selon une direction normale à la plaque 8.

Avantageusement, la section transversale de l'obstacle 50 est au moins égale à la moitié de la section transversale du canal 32 (section s'étendant selon la longueur du canal 32).

Dans cet exemple, l'obstacle 50 est formé par un bossage longiligne s'étendant tout le long du canal 32. L'obstacle 50 est par exemple obtenu par déformation de la plaque 8. Ce bossage présente une hauteur inférieure ou égale à 30% ou à 50% de la largeur du canal 32 (la largeur du canal 32 pouvant se définir comme la distance entre les canaux 30 et les canaux 34). Cette hauteur et cette largeur sont ici mesurées selon l'axe longitudinal de la plaque 8.

La figure 5 représente l'évolution du gradient de pression à l'entrée des canaux 30 avec ou sans l'obstacle 50. La pression est celle du fluide à l'entrée des canaux 30, c'est-à-dire ici à leur extrémité qui est reliée au canal 32. Le graphique représente en abscisse un indice N identifiant de façon unique un canal 30 et, en ordonnée, pour un canal donné, la valeur absolue de la différence de pression ΔP, exprimée en kPa, entre ce canal 30 et un canal de référence. On prend ici comme canal de référence le canal situé sur le bord du réseau d'écoulement qui se trouve en regard du canal 34 qui présente la plus faible longueur. Ce canal de référence porte la référence 60 sur la figure 2. Les canaux 30 sont ici indexés continument et de façon croissante depuis ce canal 60 jusqu'au canal 30 qui se trouve sur le bord opposé du réseau d'écoulement.

La courbe 100 correspond au cas où le canal 32 comporte un obstacle 50. Les courbes 102 et 104 correspondent aux cas où le canal 32 et lobstacle 50 sont omis et où chaque canal 34 est directement raccordé, respectivement, à 2 ou à 4 canaux 30.

Les résultats sont issus de simulations numériques d'écoulements à l'aide de logiciels de calcul tels que Fluent® ou Solidworks Flow Simulation®. Ici, la pression du fluide après entrée dans le collecteur 20 est de 1,5 Pa. Le fluide présente, à l'extrémité 40 des canaux 34, une différence de pression de 10 kPa entre les canaux 34 situés aux bords opposés de la zone 33. Cela est causé par la longueur différente des canaux 34. En effet, ici, la perte de charge du fluide dans les canaux 34 est constante par unité de longueur. La perte de charge en sortie des canaux 34 est donc moindre pour ceux qui présentent une longueur réduite.

On observe que dans le cas où lobstacle 50 est utilisé (courbe 100), la différence de pression est moindre par rapport aux cas où l'obstacle 50 est omis et où les canaux 34 sont directement reliés aux canaux 30.

Avantageusement, la plaque 8 comporte des obstacles secondaires 52, 54 (figure 3, 4). De cette façon, ils servent d'appui mécanique pour l'AME 6. En effet, si le canal 32 était trop large et l'obstacle 50 trop éloigné des extrémités 40 ou des canaux 30, l'AME 6 risquerait de se déformer et d'entrer mécaniquement en contact avec le fond du canal 32, car l'AME 6 présente typiquement une faible rigidité.

Ces obstacles 52, 54 sont ici de dimensions identiques (hauteur, et largeur selon la direction d'écoulement) à l'obstacle 50.

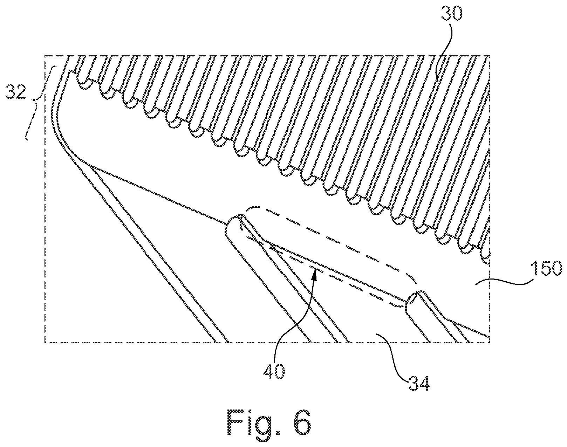

La figure 6 représente un obstacle 150 apte à remplacer l'obstacle 50. Cet obstacle 150 est formé par une surélévation du fond du canal 32 par rapport au fonds respectifs des canaux 30 et 34. Cette surélévation s'étend sur toute la longueur et la largeur du canal 32.

De nombreux autres modes de réalisation sont possibles.

Chaque plaque bipolaire 8, 9 peut inclure deux plaques de guidage d'écoulement solidaires. Dans ce cas, les plaques 8, 9 respectives peuvent être chacune formées de deux tôles accolées dos à dos par collage ou par assemblage.

Le fluide peut être différent. L'invention s'applique bien entendu également à l'injection d'autres types de carburants, par exemple du méthanol.

Le sens de l'écoulement du fluide peut être différent. Dans un souci de simplification, la solution de l'invention a été décrite seulement pour l'écoulement du carburant. L'invention s'applique également à l'écoulement du comburant d'un collecteur d'entrée, à travers des canaux d'écoulement, jusqu'à un collecteur de sortie.

En variante, les canaux 30 et/ou 34 ont une forme non rectiligne. Par exemple, les canaux 30 et/ou 34 s'étendent le long d'une direction essentiellement longitudinale en présentant des ondulations. L'invention n'est pas limitée au cas des canaux parallèles et s'applique aux plaques bipolaires dont les canaux présentent l'organisation en serpentin ou en canaux interdigités.

Les canaux 34 ne sont pas forcément identiques les uns aux autres et peuvent présenter des formes différentes. En particulier, les canaux 34 peuvent présenter des largeurs différentes les unes des autres.

En variante, l'obstacle 50 est ménagé non pas sur la plaque 8 mais sur la face de l'AME 6 qui est tournée vers la plaque 8. Cet obstacle s'étend en saillie depuis cette face de l'AME 6 jusqu'à l'intérieur du canal 32.

En variante, les obstacles 52, 54 sont réalisés différemment de l'obstacle 50. Ils peuvent aussi être placés ailleurs, par exemple ménagés entre l'obstacle 50 et les canaux 30.

## Revendications

1. Plaque (8) de guidage d'écoulement d'un fluide pour réacteur électrochimique, cette plaque comportant sur une même face :
- un collecteur d'écoulement (20) ;
- une pluralité de canaux d'écoulement (30), ménagés sur la plaque pour assurer l'écoulement d'un fluide et s'étendant selon une même direction longitudinale;
- un canal d'échange (32), s'étendant selon une direction transversale auxdits canaux d'écoulement et mettant en communication entre eux lesdits canaux d'écoulement,
- une pluralité de canaux d'alimentation (34), ménagés sur la plaque pour assurer l'écoulement d'un fluide, chaque canal d'alimentation s'étendant selon une même direction longitudinale et étant connectés fluidiquement :
• d'un côté, par une première extrémité au collecteur d'écoulement, et
• de l'autre côté, par une seconde extrémité (40), au canal d'échange cette plaque étant **caractérisée en ce que** le canal d'échange (32) comporte au moins un obstacle (50) ménagé entre chaque seconde extrémité desdits canaux d'alimentation et lesdits canaux d'écoulement de façon à obturer partiellement l'écoulement entre lesdites secondes extrémités et les canaux d'écoulement, une section de passage de fluide étant ménagée au-dessus de l'obstacle et s'étendant en continu selon la direction transversale en vis-à-vis des canaux d'écoulement, cette section de passage de fluide présentant une hauteur au moins égale à 30% de la hauteur des canaux d'alimentation, l'obstacle étant formé par un bossage commun s'étendant de façon continue à l'intérieur du canal d'échange (32) le long de la direction transversale.et présentant une hauteur au plus égale à 70% de la hauteur des canaux d'alimentation, la hauteur de l'obstacle étant mesurée selon une direction perpendiculaire à la plaque.

2. Plaque selon la revendication 1, dans laquelle ledit obstacle (50) présente une hauteur au moins égale à 30% de la hauteur des canaux d'alimentation.

3. Plaque selon la revendication 2, dans laquelle ledit obstacle (50) présente une hauteur supérieure ou égale à la moitié de la hauteur des canaux d'alimentation.

4. Plaque selon la revendication 2 ou 3, dans laquelle ladite section de passage de fluide continue présente une hauteur comprise entre 40 et 60% de la hauteur des canaux d'alimentation.

5. Plaque selon l'une quelconque des revendications précédentes, dans laquelle l'obstacle (50) ménage une section de passage du fluide au moins 30% inférieure à la somme des sections transversales dans les deuxièmes extrémités des canaux d'alimentation.

6. Plaque selon l'une quelconque des revendications précédentes, dans laquelle tous les canaux d'écoulement (30) présentent une même section transversale.

7. Plaque selon l'une quelconque des revendications précédentes, dans laquelle ledit canal d'échange (32) met en communication l'ensemble des canaux d'alimentation de ladite face de la plaque.

8. Plaque selon l'une quelconque des revendications précédentes, dans laquelle les canaux d'écoulement (30) sont parallèles entre eux.

9. Plaque selon l'une quelconque des revendications précédentes, dans laquelle les obstacles (50) forment au moins une restriction de hauteur pour tout écoulement direct entre chaque canal d'alimentation et chaque canal d'écoulement.

10. Ensemble (4) pour un réacteur électrochimique comportant :
- un assemblage membrane-électrodes (6) et
- des première et seconde plaques de guidage (8, 9) d'écoulement d'un fluide conformes chacune à l'une quelconque des revendications précédentes, les première et seconde plaques étant accolées sur des faces opposées de l'assemblage membrane-électrodes pour permettre l'écoulement de fluides destinés à traverser cet assemblage membrane-électrodes,
- les canaux d'écoulement des première et seconde plaques formant respectivement des zones dites de réaction superposées l'une par rapport à l'autre, les canaux d'acheminement des première et seconde plaques formant respectivement des zones dites d'échange superposées l'une par rapport à l'autre.

## Patentansprüche

1. Fluidverteilerplatte (8) für einen elektrochemischen Reaktor, wobei diese Platte auf einer gleichen Seite Folgendes umfasst:
- einen Strömungssammler (20);
- eine Vielzahl von Strömungskanälen (30), die an der Platte eingerichtet sind, um das Strömen eines Fluids sicherzustellen, und die sich gemäß einer gleichen Längsrichtung erstrecken;
- einen Austauschkanal (32), der sich gemäß einer zu den Strömungskanälen quer verlaufenden Richtung erstreckt und die Strömungskanäle untereinander in Kommunikation bringt,
- eine Vielzahl von Zufuhrkanälen (34), die an der Platte eingerichtet sind, um das Strömen eines Fluids sicherzustellen, wobei sich jeder Zufuhrkanal gemäß einer gleichen Längsrichtung erstreckt und sie fluidisch folgendermaßen verbunden sind:
• auf der einen Seite durch ein erstes Ende mit dem Strömungssammler und
• auf der anderen Seite durch ein zweites Ende (40) mit dem Austauschkanal, wobei diese Platte **dadurch gekennzeichnet ist, dass** der Austauschkanal (32) mindestens ein Hindernis (50) umfasst, das so zwischen jedem zweiten Ende der Zufuhrkanäle und den Strömungskanälen eingerichtet ist, dass es die Strömung zwischen den zweiten Enden und den Strömungskanälen teilweise blockiert, wobei ein Fluiddurchgangsquerschnitt oberhalb des Hindernisses eingerichtet ist und sich durchgehend gemäß der Querrichtung gegenüber den Strömungskanälen erstreckt, wobei dieser Fluiddurchgangsquerschnitt eine Höhe von mindestens 30 % der Höhe der Zufuhrkanäle aufweist, wobei das Hindernis durch eine gemeinsame Erhebung gebildet ist, die sich im Inneren des Austauschkanals (32) entlang der Querrichtung durchgehend erstreckt und eine Höhe von höchstens 70 % der Höhe der Zufuhrkanäle aufweist, wobei die Höhe des Hindernisses gemäß einer zu der Platte senkrechten Richtung gemessen wird.

2. Platte nach Anspruch 1, wobei das Hindernis (50) eine Höhe von mindestens 30 % der Höhe der Zufuhrkanäle aufweist.

3. Platte nach Anspruch 2, wobei das Hindernis (50) eine Höhe größer als oder gleich der Hälfte der Höhe der Zufuhrkanäle aufweist.

4. Platte nach Anspruch 2 oder 3, wobei der durchgehende Fluiddurchgangsquerschnitt eine Höhe zwischen 40 und 60 % der Höhe der Zufuhrkanäle aufweist.

5. Platte nach einem der vorhergehenden Ansprüche, wobei das Hindernis (50) einen Fluiddurchgangsquerschnitt einrichtet, der mindestens 30 % kleiner als die Summe der Querschnitte in den zweiten Enden der Zufuhrkanäle ist.

6. Platte nach einem der vorhergehenden Ansprüche, wobei alle Strömungskanäle (30) einen gleichen Querschnitt aufweisen.

7. Platte nach einem der vorhergehenden Ansprüche, wobei der Austauschkanal (32) die Gesamtheit der Zufuhrkanäle der Seite der Platte in Kommunikation bringt.

8. Platte nach einem der vorhergehenden Ansprüche, wobei die Strömungskanäle (30) untereinander parallel sind.

9. Platte nach einem der vorhergehenden Ansprüche, wobei die Hindernisse (50) mindestens eine Höhenbeschränkung für jede direkte Strömung zwischen jedem Zufuhrkanal und jedem Strömungskanal bilden.

10. Anordnung (4) für einen elektrochemischen Reaktor, die Folgendes umfasst:
- eine Membran-Elektroden-Einheit (6) und
- eine erste und eine zweite Fluidverteilerplatte (8, 9), die jeweils einem der vorhergehenden Ansprüche entsprechen, wobei die erste und die zweite Platte an gegenüberliegenden Seiten der Membran-Elektroden-Einheit angebracht sind, um das Strömen von Fluiden, die diese Membran-Elektroden-Einheit durchqueren sollen, zu ermöglichen,
- wobei die Strömungskanäle der ersten und der zweiten Platte jeweils sogenannte Reaktionszonen bilden, die übereinander angeordnet sind, wobei die Zuleitungskanäle der ersten und der zweiten Platte jeweils sogenannte Austauschzonen bilden, die übereinander angeordnet sind.

## Claims

1. Fluid flow guide plate (8) for an electrochemical reactor, this plate comprising on one and the same face:
- a flow manifold (20);
- a plurality of flow channels (30), made on the plate to ensure the flow of a fluid and extending along one and the same longitudinal direction;
- an exchange channel (32), extending along a direction transverse to said flow channels and placing said flow channels in communication with one another;
- a plurality of supply channels (34), made on the plate to ensure the flow of a fluid, each supply channel extending along one and the same longitudinal direction and being fluidically connected:
• on the one hand, by a first end to the flow manifold, and
• on the other hand, by a second end (40), to the exchange channel,
this plate being **characterized in that** the exchange channel (32) comprises at least one obstacle (50) made between each second end of said supply channels and said flow channels so as to partially close off the flow between said second ends and the flow channels, a fluid flow area being made above the obstacle and extending continuously along the transverse direction with respect to the flow channels, this fluid flow area having a height at least equal to 30% of the height of the supply channels, the obstacle being formed by a common boss extending continuously inside the exchange channel (32) along the transverse direction and having a height at most equal to 70% of the height of the supply channels, the height of the obstacle being measured along a direction perpendicular to the plate.

2. Plate according to Claim 1, in which said obstacle (50) has a height at least equal to 30% of the height of the supply channels.

3. Plate according to Claim 2, in which said obstacle (50) has a height greater than or equal to half of the height of the supply channels.

4. Plate according to Claim 2 or 3, in which said continuous fluid flow area has a height between 40% and 60% of the height of the supply channels.

5. Plate according to any one of the preceding claims, in which the obstacle (50) makes a flow area of the fluid at least 30% less than the sum of the transverse cross sections in the second ends of the supply channels.

6. Plate according to any one of the preceding claims, in which all the flow channels (30) have one and the same transverse cross section.

7. Plate according to any one of the preceding claims, in which said exchange channel (32) places all of the supply channels of said face of the plate in communication.

8. Plate according to any one of the preceding claims, in which the flow channels (30) are parallel to one another.

9. Plate according to any one of the preceding claims, in which the obstacles (50) form at least one height restriction for any direct flow between each supply channel and each flow channel.

10. Unit (4) for an electrochemical reactor comprising:
- a membrane-electrode assembly (6) and
- first and second fluid flow guide plates (8, 9), each in accordance with any one of the preceding claims, the first and second plates being fastened to opposite faces of the membrane-electrode assembly to enable the flow of fluids intended to pass through this membrane-electrode assembly,
- the flow channels of the first and second plates respectively forming reaction zones superposed with respect to one another, the transportation channels of the first and second plates respectively forming exchange zones superposed with respect to one another.
